Europäisches Patentamt

European Patent Office

Office européen des brevets

(19)

(11) Veröffentlichungsnummer : **0 170 054**
**B1**

(12) **EUROPÄISCHE PATENTSCHRIFT**

(45) Veröffentlichungstag der Patentschrift :
24.01.90

(21) Anmeldenummer : 85107922.8

(22) Anmeldetag : 26.06.85

(51) Int. Cl.⁵ : **H 01 B  3/20**, H 01 G  4/22,
H 01 G  4/04

(54) Isolieröl für elektrische Geräte.

(30) Priorität : 11.07.84 DE 3425530

(43) Veröffentlichungstag der Anmeldung :
05.02.86 Patentblatt 86/06

(45) Bekanntmachung des Hinweises auf die Patenterteilung : 24.01.90 Patentblatt 90/04

(84) Benannte Vertragsstaaten :
AT BE CH DE FR GB IT LI NL SE

(56) Entgegenhaltungen :
EP--A-- 0 008 698
EP--A-- 0 037 280
EP--A-- 0 063 297
GB--A--  625 958

(73) Patentinhaber : Siemens Aktiengesellschaft
Wittelsbacherplatz 2
D-8000 München 2 (DE)

(72) Erfinder : Edler, Wolfgang, Dipl.-Phys.
Schwabstrasse 2
D-7923 Steinheim (DE)
Erfinder : Schreiber, Friedewald, Dipl.-Phys.
Fichtenweg 10
D-7923 Steinheim (DE)

EP 0 170 054 B1

## Beschreibung

Die Erfindung betrifft ein Isolieröl für elektrische Geräte.

Elektrische Geräte für hohe Spannungen, z. B. Kondensatoren, Transformatoren, Kabel, Schalter und Meßwandler, werden im allgemeinen mit einer dielektrischen Flüssigkeit gefüllt, die einerseits Teilentladungen im Gerät verhindern und andererseits die entstehende Verlustwärme abführen soll.

Es hat sich herausgestellt, daß Teilentladungen in einer Isolierflüssigkeit auf Dauer nur dann verhindert werden können, wenn unter dem Einfluß eines elektrischen Feldes ein von der Flüssigkeit umschlossenes Gasvolumen kleiner wird (gasaufnehmende Flüssigkeit). Im Gegensatz dazu vergrößert sich die Gasblase in einer gasabspaltenden Flüssigkeit unter dem Einfluß eines elektrischen Feldes. Diese Eigenschaften der Isolierflüssigkeit werden als « Gasverhalten » (engl: gassing tendency) bezeichnet. Das Gasverhalten hängt vom Chemischen Aufbau der Isolierflüssigkeit, aber auch von den angewandten Feldstärken ab. z. B. kann eine Isolierflüsigkeit bei relativ niedriger Feldstärkebeanspruchung in Transformatoren noch gasaufnehmend sein, während sie bei sehr viel höherer Feldstärkebeanspruchung in Kondensatoren Gas abspaltend wird.

Als dielektrische Flüssigkeiten wurden in der Vergangenheit hauptsächlich polychlorierte Biphenyle (PCB) verwendet, die aber wegen ihrer gesundheitsschädigenden Wirkungen inzwischen in vielen Staaten für die Anwendung in elektrischen Geräten verboten sind.

Eine statt PCB häufig verwendete Isolierflüssigkeit ist Mineralöl, z. B. Transformatorenöl. Dieses hat zwar den Vorteil, relativ preisgünstig zu sein, jedoch wird mit zunehmender Feldstärke immer mehr Gas abgespalten.

Es wurden daher in letzter Zeit synthetische, benzolringreiche dielektrische Isolierflüssigkeiten entwickelt, die auch noch bei höheren Feldstärken gasaufnehmend sind. Diese Flüssigkeiten haben allerdings den Nachteil, daß sie beim Einsatz in z. B. selbstheilenden Kondensatoren eine deutlich verringerte Spannungsfestigkeit zur Folge haben. Weiterhin liegen, zumindest zum gegenwärtigen Zeitpunkt, die Preise Ca. 3 bis 5 mal höher als bei Mineralöl.

Als Beispiel für eine derartige dielektrische Flüssigkeit mit gutem $H_2$-Gasabsorptionsvermögen ist in ETZ Bd. 104 (1983), Seiten 480 bis 483 ein Ditolylether angegeben.

Ein weiteres Beispiel für derartige Flüssigkeiten sind Diarylalkane, z. B. Phenyl-xylyl-ethan (PXE), das aus der EP 00 39 546 als Imprägniermittel für Kondensatoren bekannt ist. Dort sind auch Mischungen aus Di-2-ethyl-hexyl-phthalat (DEHP) und PXE beschrieben, denen ein Epoxidstabilisator zugesetzt ist.

Es ist auch bereits versucht worden, die Vorteile von Mineralöl mit denen synthetischer, gasaufnehmender Isolierflüssigkeiten zu verbinden, indem diese Stoffe miteinander gemischt werden. Allerdings tritt schon bei dem im Kondensator auftretenden Feldstärken bei Mischungsverhältnissen mit mehr als 50 Gew% Mineralölanteil das ungünstige Gasverhalten des Mineralöls verstärkt in Erscheinung, und ab einem Gehalt von Ca. 60 Gew% Mineralöl sind die Flüssigkeiten nicht mehr gasaufnehmend sondern gasabgebend. Es ist deshalb erforderlich, bei derartigen Mischungen darauf zu achten, den Mineralölanteil unter 50 Gew% zu belassen, so daß der Preisvorteil des Mineralöls nur abgeschwächt zur Wirkung gelangt, sowie die Spannungsfertigkeit z. B. selbstheilender Kondensatoren stark reduziert wird.

So ist aus der EP-A-0 037 280 ein elektrisches Isolieröl bekannt, das aus 20 bis 99 Vol% Tetrachloroethylen und 1 bis 80 Vol% einer weiteren Flüssigkeit besteht, die u. a. aus Mineralöl oder Isopropyl-biphenyl bestehen kann. Dieser Mischung kann ein Antioxidationsmittel in der Größenordnung von ungefähr 0,003 bis 0,01 % zugesetzt werden. Ferner kann das Tetrachloroethylen selbst einen Anteil eines nicht näher bezeichneten Stabilisators enthalten, der geringer als 0,05 % ist. Über das « Gasverhalten » des bekannten Isolieröls ist nichts angeführt, jedoch kann festgestellt werden, daß weder das Tetrachloroethylen noch die angeführten Zusatzmengen an Additiven geeignet sind, einen günstigen Einfluß auf das Gasverhalten auszuüben.

Weiterhin ist aus der EP-A-0 063 297 ein Imprägniermittel bekannt, das auf der Basis von alkylierten Diphenyläthern einen Ditolyläther enthält. Diesem Imprägniermittel können jeweils 0,05 bis 2,0 Gewichtsteile eines Antioxidationsmittels, z. B. Di-tert.-amyl-hydrochinon, und eines Epoxid-Stabilisators zugemischt werden. Da das Imprägniermittel kein Mineralöl enthält, lassen sich Aussagen über das « Gasverhalten » von Imprägniermittelgemischen mit überwiegendem Mineralölanteil aus dieser Druckschrift nicht herleiten.

Aufgabe der Erfindung ist es, ein Elektroisolieröl anzugeben, das aus einer Mischung von Mineralöl und einer synthetischen gasaufnehmenden Isolierflüssigkeit besteht, und bei dem der Anteil des Mineralöls wesentlich mehr als 50 Gew% betragen kann, ohne daß die Flüssigkeit ihre gasaufnehmenden Eigenschaften verliert.

Diese Aufgabe wird mit einem Isolieröl für elektrische Geräte gelöst, das aus einer Basismischung aus 50 bis 95 Gew% eines Mineralöls und 5 bis 50 Gew% einer gasaufnehmenden dielektrischen Flüssigkeit und einem Additiv aus einem Antioxidationsmittel und/oder einem Epoxid-Stabilisator und/oder einem Metalldesaktivator besteht, bei dem die gasaufnehmende Flüssigkeit aus Molekülen besteht, die aus miteinander direkt oder über ein Radikal verknüpften, ggf. teilweise substituierten Benzolringen besteht und bei dem zu 100 g Basismischung 0,1 bis 5 g Additive zugesetzt sind.

Damit wird der Vorteil erzielt, daß das Gasverhalten derartiger Isolieröle erheblich verbessert wird. Durch die erfindungsgemäße Zumischung der Additive kann eine beträchtliche Erhöhung des Mineralölanteils erfolgen. Trotz der Kosten für die Additive, resultiert daraus ein geringerer Preis der Isolierflüssigkeiten. Ein weiterer Vorteil derartiger Mischungen gegenüber synthetischen gasaufnehmenden Flüssigkeiten besteht darin, daß sie eine wesentlich höhere Spannungsfestigkeit in selbstheilenden Kondensatoren bewirken, womit sie dort als Imprägniermittel bevorzugt eingesetzt werden können.

Als Antioxidationsmittel sind Additive auf der Basis sterisch gehinderter Phenole wie z. B.

    a)   1,3,5-Tri-methyl-2,4,6-tris-3,5-di-tert-butyl-4-hydroxybenzyl-benzol,

    b) 2,6-Di-tert-butyl-4-methyl-phenol oder

    c) Alkylierte Phenyl-$\alpha$-naphthaline geeignet.

Es können auch Antioxidationsmittel auf aminischer Basis eingesetzt werden, z. B.
Phenyl-$\alpha$-naphthylamin.

Der Epoxidstabilisator kann beispielsweise aus 2,2-Bis(4-oxi-2-methyl-oxiranyl-phenyl)-propan bestehen und als Metalldesaktivator kann ein Triazol-Derivat wie beispielsweise Benzotriazol oder Methyl-benzyl-triazol eingesetzt werden.

Bevorzugte gasaufnehmende Flüssigkeiten bestehen aus Molekülen, die aus miteinander direkt oder über ein Radikal verknüpften, gegebenenfalls teilweise substituierten Benzolringen bestehen.

Beispiele für synthetische, benzolringreiche und deshalb gasaufnehmende Flüssigkeiten sind neben den bereits erwähnten Ditolylether und PXE z. B. eine Mischung aus Mono- und Dibenzyltoluol oder Isopropyl-biphenyl und Ethyl-diphenyl-methan.

Im folgenden werden anhand von Ausführungsbeispielen vorteilhafte Mischungen von Isolierflüssigkeiten angeführt.

In der dazugehörenden Zeichnung ist das Gasverhalten von gemischten Isolierflüssigkeiten ohne und mit Additiv-Zusätzen dargestellt.

Ausführungsbeispiel 1

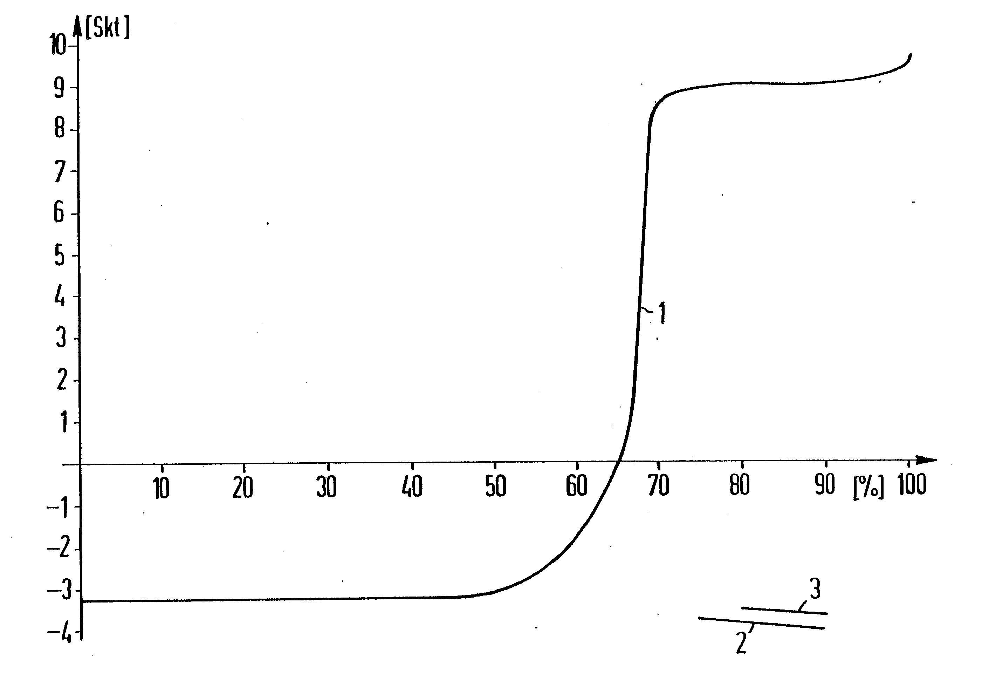

Als Vergleich wurde das Verhalten einer Basismischung von Mineralöl und Ditolylether bei zunehmenden Mineralölgehalten untersucht. Das Gasverhalten dieser Mischungen ist in der Figur als Kurve 1 wiedergegeben, wobei sich die Prozentangaben auf der Abszisse auf den Mineralölanteil beziehen.

Als Meßverfahren für das Gasverhalten wurde die in dem IEC-Schriftstück 10 A (Sekretariat) 75 beschriebene « Methode B » gewählt. Die Meßspannung gegenüber der « Methode B » wurde dabei von 12 kV auf 16 kV angehoben. Dies bedeutet eine erhebliche Verschärfung der Prüfbeanspruchung jedoch liegt die Spannungsbeanspruchung z. B. in Kondensatoren noch wesentlich höher. Auf der Ordinate in der Figur sind die an der Meßapparatur angebrachten Skalenteile (Skt.) angegeben, wobei positive Skalenteile Gasabgabe und negative Skalenteile Gasaufnahme bedeutet.

Wie der Kurve 1 zu entnehmen ist, wirken sich bei der genannten Prüfspannung Mineralölanteile unter 50 Gew% nicht auf das Gasaufnahmeverhalten der Basismischung aus. Oberhalb von 5a Gew% Mineralölanteil verschlechtert sich die Gasaufnahme wesentlich. Ab einen Mineralölgehalt von ca. 65 Gew% nimmt die Basismischung kein Gas mehr auf, sondern es wird zunehmend Gas abgegeben.

Ausführungsbeispiel 2

Zu je 100 g Basismischung gemäß Ausführungsbeispiel 1 wurden 0,5 g Antioxidationsmittel auf der Basis sterisch gehinderter Phenole (alkyliertes Phenyl-$\alpha$-naphthalin) und 0,05 g Triazol-Derivat (z. B. Benzotriazol) als Metall-Desaktivator zugesetzt. Das Gasverhalten dieser Mischungen ist in der Figur als Kurve 2 bezeichnet.

Ausführungsbeispiel 3

Zu je 100 g Basismischung gemäß Ausführungsbeispiel 1 wurden 0,35 g Phenyl-$\alpha$-naphthylamin als aminisches Antioxidationsmittel und 0,15 g 2,6-Di-tert-butyl-4-methyl-phenol als phenolisches Antioxidationsmittel zugesetzt. Das Gasverhalten dieser Mischungen ist in der Figur als Kurve 3 wiedergegeben.

Wie den Ausführungsbeispielen und der dazugehörenden Zeichnung zu entnehmen ist, läßt sich das Gasverhalten der Gasmischung durch die erfindungsgemäßen Zusätze derart steuern, daß eine Gasaufnahme bis zu Mineralölgehalten von über 90 Gew% gewährleistet wird. Diese überraschende Tatsache, daß durch den erfindungsgemäßen Zusatz von an sich geringfügigen Mengen an Additiven das Gasverhalten der im Ausführungsbeispiel 1 angeführten Basismischung wesentlich verbessert wird, wird auf einen synergistischen Effekt der als Additive eingesetzten, angeführten Stoffe zurückgeführt.

Die Spannungsfestigkeit, die sich bei sinkenden Mineralölgehalten bis zur Hälfte verringert, wird durch die gemäß der Erfindung ermöglichten höheren Mineralölanteile ebenfalls günstig beeinflußt.

Ausführungsbeispiel 4

Zu je 100 g der Basismischung gemäß Ausführungsbeispiel 1 wurden jeweils 0,5 g 1,3,5-Tri-methyl-2,4,6-tris-3,5-ditert-butyl-4-hydroxy-benzyl-benzol (phenolisches Antioxidationsmittel) und Benzatriazol als Metalldesaktivator zugesetzt.

Ausführungsbeispiel 5

Zu je 100 g der Basismischung gemäß Ausführungsbeispiel 1 wurden 0,1 g Methyl-Benzyl-triazol als Metalldesaktivator zugesetzt.

Ausführungsbeispiel 6

Zu je 100 g der Basismischung gemäß Ausführungsbeispiel 1 wurden 0,4 g 1-Methyl-naphthalin und 0,5 g 2-Methyl-naphthalin zugesetzt.

## Patentansprüche

1. Isolieröl für elektrische Geräte, das aus einer Basismischung aus 50 bis 95 Gew% eines Mineralöls und 5 bis 50 Gew% einer gasaufnehmenden dielektrischen Flüssigkeit und einem Additiv aus einem Antioxidationsmittel und/oder einem Epoxid-Stabilisator und/oder einem Metalldesaktivator besteht, bei dem die gasaufnehmende Flüssigkeit aus Molekülen besteht, die aus miteinander direkt oder über ein Radikal verknüpften, ggf. teilweise substituierten Benzolringen besteht und bei dem zu 100 g Basismischung 0,1 bis 5 g Additive zugesetzt sind.

2. Isolieröl nach Anspruch 1, dadurch gekennzeichnet, daß ein Antioxidationsmittel auf der Basis sterisch gehinderter Phenole zugesetzt ist.

3. Isolieröl nach Anspruch 2, dadurch gekennzeichnet, daß das Antioxidationsmittel aus
   a) 1,3-5-Tri-methyl-2,4,6-tris-3,5-di-tert.-butyl-4-hydroxy-benzyl-benzol,
   b) 2,6-di-tert.-butyl-4-methyl-phenol oder
   c) einem alkyliertem Phenyl-α-naphthalin besteht.

4. Isolieröl nach Anspruch 1, dadurch gekennzeichnet, daß ein Antioxidationsmittel auf aminischer Basis zugesetzt ist.

5. Isolieröl nach Anspruch 4, dadurch gekennzeichnet, daß das Antioxidationsmittel aus Phenyl-α-naphthylamin besteht.

6. Isolieröl nach Anspruch 1, dadurch gekennzeichnet, daß der Epoxid-Stabilisator aus 2,2-Bis(4-oxy-2-methyl-oxyranyl-phenyl)-propan besteht.

7. Isolieröl nach Anspruch 1, dadurch gekennzeichnet, daß der Metalldesaktivator aus einem Triazol-Derivat besteht.

8. Isolieröl nach Anspruch 7, dadurch gekennzeichnet, daß der Metalldesaktivator aus
   a) Benzotriazol oder
   b) Methyl-benzyl-triazol besteht.

9. Isolieröl nach einem der Ansprüche 1 bis 8, dadurch gekennzeichnet, daß die gasaufnehmende Flüssigkeit aus
   a) Ditolylether
   b) Phenyl-xylyl-ethan
   c) einer Mischung aus Mono- und Dibenzyltoluol
   d) Isopropyl-biphenyl oder
   e) Ethyl-diphenyl-methan besteht.

## Claims

1. Insulating oil for electrical devices which is composed of a basic mixture of 50 to 95 % by weight of a mineral oil and 5 to 50 % by weight of a gas-absorbing dielectric liquid and an additive composed of an antioxidant and/or an epoxy stabilizer and/or a metal deactivator, in which the gas-absorbing liquid is composed of molecules which are composed of benzene rings, some of which may be substituted, which are linked to each directly or via a radical, and in which 0.1 to 5 g of additives are added to 100 g of basic mixture.

2. Insulating oil according to Claim 1, characterized in that an antioxidant based on sterically hindered phenols is added.

3. Insulating oil according to Claim 2, characterized in that the antioxidant is composed of
   a) 1,3,5-trimethyl-2,4,6-tris-3,5-di-tert-butyl-4-hydroxybenzylbenzene,
   b) 2,6-di-tert-butyl-4-methylphenol or
   c) an alkylated phenyl-α-naphthalene.

4. Insulating oil according to Claim 1, characterized in that an antioxidant with an aminic base is added.

5. Insulating oil according to Claim 4, characterized in that the antioxidant is composed of phenyl-α naphthylamine.

6. Insulating oil according to Claim 1, characterized in that the epoxy stabilizer is composed of 2,2bis(4-oxy-2-methyloxyranylphenyl) propane.

7. Insulating oil according to Claim 1, characterized in that the metal deactivator is composed of a triazole derivative.

8. Insulating oil according to Claim 7, characterized in that the metal deactivator is composed of
   a) benzotriazole or
   b) methylbenzyltriazole.

9. Insulating oil according to one of Claims 1 to 8, characterized in that the gas-absorbing liquid is composed of
   a) ditolyl ether,
   b) phenylxylylethane,
   c) a mixture of mono- and dibenzyltoluene,
   d) isopropylbiphenyl or
   e) ethyldiphenylmethane.

## Revendications

1. Huile isolante pour appareils électriques, qui est constituée d'un mélange de base comprenant de 50 à 95 % en poids d'une huile minérale et de 5 à 50 % en poids d'un liquide diélectrique absorbant les gaz et d'un additif composé d'un agent anti-oxydant et/ou d'un stabilisant à base d'époxyde et/ou d'un désactivateur de métaux, dans laquelle le liquide absorbant le gaz est constitué de molécules qui sont constituées de cycles benzéniques éventuellement partiellement substitués et reliés directement les uns aux autres ou par l'intermédiaire d'un radical, et dans laquelle de 0,1 à 5 g d'additifs sont ajoutés pour 100 g du mélange de base.

2. Huile isolante suivant la revendication 1, caractérisée en ce qu'un agent anti-oxydant à base de phénol à empêchement stérique est ajouté.

3. Huile isolante suivant la revendication 2, caractérisée en ce que l'agent anti-oxydant est constitué de

a) 1,3,5-triméthyl-2,4,6-tris-3,5-di-tert.-butyl-4-hydroxy-benzyl-benzène,

b) 2,6-di-tert.-butyl-4-méthyl-phénol, ou

c) un phényl α-naphtalène alcoylé.

4. Huile isolante suivant la revendication 1, caractérisée en ce qu'un agent anti-oxydant à base d'amine est ajouté.

5. Huile isolante suivant la revendication 4, caractérisée en ce que l'agent anti-oxydant est constitué de phényl-α-naphtylamine.

6. Huile isolante suivant la revendication 1, caractérisée en ce que le stabilisant à base d'époxyde est constitué de 2,2-bis-(4-hydroxy-2-méthyl-oxyranyl-phényl)propane.

7. Huile isolante suivant la revendication 1, caractérisée en ce que le désactivateur de métaux est constitué d'un dérivé de triazole.

8. Huile isolante suivant la revendication 7, caractérisée en ce que le désactivateur de métaux est constitué de

a) benzotriazole ou

b) méthyl-benzyl-triazole.

9. Huile isolante suivant l'une des revendications 1 à 8, caractérisée en ce que le liquide absorbant les gaz est constitué de

a) éther ditolylique,

b) phényl-xylyl-éthane,

c) un mélange de monobenzyltoluène et de dibenzyltoluène,

d) isopropyl-biphényle ou

e) éthyl-diphényl-méthane.